# EUROPÄISCHE PATENTSCHRIFT

(11) **EP 4 113 238 B1**
(45) Veröffentlichungstag und Bekanntmachung des Hinweises auf die Patenterteilung: **19.11.2025**
(21) Anmeldenummer: 22178629.6
(22) Anmeldetag: 13.06.2022
(51) Int. Cl.: G05D 1/00

(54) **VERFAHREN ZUR AUTONOMEN BEARBEITUNG VON BODENFLÄCHEN**
METHOD FOR AUTONOMOUS PROCESSING OF FLOOR SURFACES
PROCÉDÉ DE TRAITEMENT AUTONOME DES SURFACES DE SOL

(30) Priorität: 30.06.2021 DE 102021206786
(43) Veröffentlichungstag der Anmeldung: 04.01.2023
(73) Patentinhaber: BSH Hausgeräte GmbH, 81739 München (DE)
(72) Erfinder: Daniel, Kristina, 97616 Bad Neustadt (DE); Hohmann, Michael, 97616 Bad Neustadt a.d. Saale (DE); Moelter, Markus, 97618 Hollstadt (DE); Schnitzer, Frank, 97616 Bad Neustadt (DE); Wiederer, Tobias, 97464 Niederwerrn (DE); Buchner, Florian, 83346 Bergen (DE); Karl, Katharina, 80798 München (DE)

(56) Entgegenhaltungen:
- CN-A- 106 983 454
- US-A1- 2019 025 838
- US-A1- 2020 225 673

## Beschreibung

Die Erfindung betrifft ein Verfahren zur autonomen Bearbeitung von Bodenflächen mit Hilfe eines mobilen, selbstfahrenden Geräts, insbesondere Bodenreinigungsgeräts wie ein Saug- und/oder Kehr- und/oder Wischroboter. Zudem betrifft die Erfindung ein mobiles, selbstfahrendes Gerät, mit dem eine derartige Bearbeitung durchführbar ist.

Mobile, selbstfahrende Geräte wie beispielsweise Saugroboter haben die Aufgabe, autonom möglichst eine gesamte Bodenfläche zu reinigen. Herkömmliche mobile, selbstfahrende Geräte können durch eine geeignete Sensorik, beispielsweise über Kameras und Objekterkennungsalgorithmen, verschiedene Hindernisse auf dem Boden vor ihnen erkennen und diese anschließend umfahren. Auf diese Weise kann verhindert werden, dass das Gerät die Hindernisse rammt, sich an ihnen festfährt oder sie einsaugt. Das Gerät erkennt also beispielsweise Engstellen bereits vor Erreichen dieser Engstelle. Bei Auswertung entsprechender Sensorwerten fährt das Gerät in einen Bereich mit problematischen Stellen häufig gar nicht erst ein, falls Durchfahrtstellen zu eng sind.

Aus den Druckschriften US 2019 / 025838 A1, US 2020 / 225673 A1 und CN 106 983 454 A ist beispielweise bekannt, Hindernisse oder Bodenbereiche mit Sensoren zu klassifizieren und basierend auf dieser Klassifizierung ein Fahr- oder Reinigungsverhalten des Roboters zu steuern.

Im Bodenbearbeitungsbereich befinden sich unter anderem auch Bereiche mit engen Platzverhältnissen, beispielsweise zwischen Stuhl- und Tischbeinen, aus denen das mobile, selbstfahrende Gerät keinen Weg mehr ins Freie finden kann oder sich sogar zwischen den Hindernissen verklemmt. Ist das mobile, selbstfahrende Gerät nicht in der Lage, sich selbst aus der Situation zu befreien, kann es seine Reinigungsarbeit nicht beenden und benötigt menschliche Hilfe. Fehlt dem mobilen, selbstfahrenden Gerät eine geeignete Sensorik, um derartig begrenzte Platzverhältnisse zu erkennen, bevor es diesen Bereich befährt, steigt die Häufigkeit der Nutzereingriffe zur Bodenbearbeitung signifikant an.

Um diese Eingriffe so gering wie möglich zu halten, werden meist sogenannte No-Go-Areas im Bereich beispielsweise von Stühlen und Tischen eingesetzt. Dies sind insbesondere Zonen, die das mobile, selbstfahrende Gerät nicht befahren soll, damit es sich gar nicht erst in eine schwierige, nicht alleine zu meisternde Situation bringt. Nachteilig hierbei ist, dass die entsprechenden Bereiche nicht gereinigt werden. Kann oder soll keine No-Go-Area eingerichtet werden, so ist es notwendig, dass der Nutzer selbst die Stühle vor Beginn der Reinigungstätigkeit zur Seite nimmt oder hochstellt, damit das mobile, selbstfahrende Gerät anschließend ungehindert reinigen kann, ohne dass der Nutzer nochmals eingreifen muss.

Vorteilhaft wäre es, das Helfen des Nutzers in Situationen, aus denen sich das mobile, selbstfahrende Gerät nicht selbst befreien kann, oder das Vorbereiten des zu reinigenden Bereiches, insbesondere das Weg- oder Hochstellen von Stühlen, zu reduzieren.

Aufgabe der Erfindung ist es also, ein Verfahren zur autonomen Bearbeitung von Bodenflächen mit reduziertem Benutzereingreifen bereitzustellen, bei dem insbesondere eine möglichst vollständige Reinigung der Bodenfläche ohne Festfahrens des Geräts gewährleistet werden kann, indem bevorzugt basierend auf einer erhöhten Interaktion zwischen Nutzer und Gerät und/oder basierend auf ein Hintenanstellen kritischer Situationen diese reduziert werden, insbesondere derartige kritische Situationen, die ein Benutzereingreifen zur Bodenreinigung benötigen.

Diese Aufgabe wird durch ein Verfahren zum Bearbeiten von Bodenflächen mit den Merkmalen des Anspruchs 1 und durch ein mobiles, selbstfahrendes Gerät mit den Merkmalen des Anspruchs 9 gelöst. Vorteilhafte Ausgestaltungen und Weiterbildungen sind Gegenstand der Unteransprüche.

Erfindungsgemäß umfasst ein Verfahren zur autonomen Bearbeitung von Bodenflächen mit Hilfe eines mobilen, selbstfahrenden Geräts, insbesondere Bodenreinigungsgeräts wie ein Saug- und/oder Kehr- und/oder Wischroboter, folgende Verfahrensschritte:
- Durchführen einer Explorationsfahrt des mobilen, selbstfahrenden Geräts in einem vorgesehenen Bodenbearbeitungsbereich und Erstellen einer Umgebungskarte,
- Erfassen eines kritischen Bereichs mit engen Platzverhältnissen mit Sensoren des mobilen, selbstfahrenden Geräts aus verschiedenen Richtungen,
- Auswerten eines Aufbaus des kritischen Bereichs mit dem Wissen über eine eigene Größe und Fähigkeiten des Geräts anhand vorbestimmter Kriterien, um eine Wahrscheinlichkeit eines Festfahrens des Geräts im kritischen Bereich auszurechnen,
- Interaktion mit einem Nutzer des mobilen, selbstfahrenden Geräts bezüglich des weiteren Vorgehens, und/oder
- Festlegen einer Bearbeitungsreihenfolge verschiedener Bereiche des Bodenbearbeitungsbereichs, wobei der kritische Bereich in der Bearbeitungsreihenfolge zuletzt gesetzt wird, wobei
der Nutzer für die Wahrscheinlichkeit des Festfahrens des Geräts im kritischen Bereich einen Grenzwert hinterlegt, ab welchem das mobile, selbstfahrende Gerät die Bearbeitung der Bodenfläche nicht beginnt und/oder den kritischen Bereich und/oder Teile des kritischen Bereichs bei der Bearbeitung der Bodenfläche auslässt.

Vorliegend wird also ein Verfahren beschrieben, bei dem das Gerät kritische Bereiche intensiver und genauer mit seinen Sensoren erfasst und deren Aufbau detaillierter auswertet. Dabei wird der kritische Bereich vorzugsweise aus mehreren Positionen und Richtungen vermessen. Mit diesem detaillierten Wissen kann das Gerät unterschiedliche Kriterien auswerten, wie beispielsweise mit welcher Reinigungsstrategie und/oder mit welchem Ablauf die Bodenfläche optimal gereinigt werden kann. Dem Nutzer können anschließend verschiedene Kriterien mitgeteilt werden. Neben der reinen Benachrichtigung des Nutzers kann eine Interaktion verbunden sein, indem beispielsweise dem Nutzer aufgezeigt wird, welche Ergebnisse erreicht werden können, falls der Nutzer zum Beispiel die Stühle aus dem Weg räumt. Zusätzlich kann das Gerät beispielsweise bei der Interaktion mit dem Nutzer einzelne Hindernisse anzeigen, mit denen das Reinigungsergebnis bereits um einen nennenswerten beziehungsweise signifikanten Teil verbessert werden kann. Durch das erfindungsgemäße Verfahren werden mit Vorteil kritische Bereiche detaillierter kartiert und es kann durch die darauf basierende Anpassung des Reinigungsverhaltens beziehungsweise durch Feedback an den Nutzer ein Festfahren in diesen Bereichen vermieden werden, so dass dort besser gereinigt werden kann. Zudem erhöht sich die Aufmerksamkeit des Nutzers für kritische Bereiche und die Akzeptanz für ein möglicherweise durchzuführendes Eingreifen aufgrund der erhöhten Interaktion zwischen Nutzer und Gerät, insbesondere durch die Information des Geräts an den Nutzer vor Reinigungsbeginn über die Wahrscheinlichkeit des Festfahrens.

Zusätzlich oder alternativ werden Situationen, in denen eine Zeitverzögerung in der Bearbeitung oder gar die Gefahr eines Steckenbleibens des Geräts auftreten können, in der Bearbeitungsreihenfolge zuletzt beziehungsweise ans Ende gesetzt. Einfach zu reinigende Bereiche werden also zuerst durchgeführt. Die Reihenfolge der Abarbeitung einzelner Bereiche wird derart vorgegeben beziehungsweise ermittelt, dass ein Abbrechen oder ein Unterbrechen der Reinigung am Anfang der Reinigung vermieden werden kann.

Beispielsweise können sich bei der Reinigung Schwierigkeiten ergeben, falls es ein erhöhtes Aufkommen von Hindernissen wie Stuhlbeinen oder Teppichkanten gibt. Vorzugsweise erfolgt eine Einteilung in Bereiche, die keine oder nur wenige, einfach zu umfahrende Hindernisse enthalten, und Bereiche, die viele Hindernisse oder solche mit gegebenenfalls hohen Schwierigkeiten enthalten. Die Einteilung kann dabei über den Nutzer erfolgen, oder automatisch durch das Gerät. Zum Beispiel erfolgt die Unterteilung in die einzelnen Bereiche in einer App auf einem tragbaren Gerät des Nutzers. Dieser kann in der App virtuelle Grenzen einführen, deren Bereiche beziffert werden, wodurch sich eine Bearbeitungsreihenfolge dieser Bereiche ergibt. Das Gerät fährt bei seiner Bearbeitung zuerst den mit beispielsweise 1 bezifferten Bereich an und reinigt diesen, bevor er die nachfolgenden (2, 3, ...) Bereiche nacheinander abarbeitet. Einfach zu bearbeitende Bereiche werden schwierig zu bearbeitenden Bereichen vorangestellt, sodass sich die Gefahr eines Festfahrens des Geräts erst zu Ende der Reinigung erhöht.

Alternativ kann das Gerät automatisch beziehungsweise selbst erkennen beziehungsweise festlegen, in welchen Bereichen des zu reinigenden Bodenbearbeitungsbereichs Schwierigkeiten auftreten können. Hierfür finden Navigationssensoren und/oder Objekterkennungssensoren des Geräts Verwendung. Zusätzlich kann bei jedem Hindernis, das dem Gerät Schwierigkeiten bei der Reinigung bereitet, dieser Bereich bei zukünftigen Reinigungsaufgaben als kritischer Bereich festgelegt werden.

Weiter kann durch das Gerät bereichsweise gemessen werden, wie lange dieser bei der Reinigung benötigt hat, um beispielsweise einen Quadratmeter des Bereichs zu reinigen. Das Gerät hat Zugriff auf die aufgezeichnete Zeit-Historie und kann diese entsprechend auswerten. Bereiche, an denen das Gerät bei der Reinigung sehr viel Zeit benötigt hat, werden zuletzt gereinigt.

Das Gerät führt das Unterteilen des Bodenbearbeitungsbereichs in kritische Bereiche bevorzugt selbstständig durch. Die Planung der Abarbeitungsreihenfolge wird also von dem Gerät anhand entsprechender Kriterien selbst bestimmt, wobei dabei die Größe, Form und Anzahl an Hindernissen je Bereichseinheit sowie die vermutliche Zeitdauer für die Reinigung je Bereichseinheit einbezogen werden. Optional kann der Nutzer die vom Gerät vorgegebene Abarbeitungsreihenfolge entsprechend seiner eigenen Anforderungen ändern.

Unter einem mobilen, selbstfahrenden Gerät ist insbesondere ein Bodenreinigungsgerät, beispielsweise Reinigungs- oder Rasenmähergerät, zu verstehen, welches insbesondere im Haushaltsbereich Bodenflächen oder Rasenflächen autonom bearbeitet. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb oder Rasenmäherbetrieb) bevorzugt ohne oder mit möglichst wenig Benutzereingriff. Beispielsweise verfährt das Gerät selbsttätig in einen vorgegebenen Raum, um entsprechend einer vorgegebenen und einprogrammierten Verfahrensstrategie den Boden ab zu reinigen.

Unter einem Bodenbearbeitungsbereich ist jeglicher räumliche Bereich zu verstehen, der zur Bearbeitung, insbesondere Reinigung vorgesehen ist. Das kann beispielsweise ein einzelner (Wohn)Raum oder eine ganze Wohnung sein. Auch lediglich Bereiche eines (Wohn)Raums oder einer Wohnung, die zur Reinigung vorgesehen sind, können darunter verstanden werden.

Unter einer Explorationsfahrt ist insbesondere eine Erkundungsfahrt zu verstehen, die dazu geeignet ist, eine zu bearbeitende Bodenfläche nach Hindernissen, Raumaufteilung und ähnliches zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Unter Hindernisse sind jegliche Objekte und/oder Gegenstände zu verstehen, die im Bodenbearbeitungsbereich angeordnet sind, beispielsweise dort liegen, und die Bearbeitung durch das mobile, selbstfahrende Gerät beeinflussen, insbesondere behindern und/oder stören wie beispielsweise Möbel, Wände, Vorhänge, Teppiche und ähnliches.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer.

Unter einer Interaktion zwischen Gerät und Nutzer ist insbesondere jegliche Möglichkeit des Informationsaustausches zu verstehen. Insbesondere kann das Gerät dem Nutzer jegliche Informationen zum zu bearbeitenden Bodenbearbeitungsbereich zur Verfügung stellen sowie jegliche Informationen zu Wahrscheinlichkeiten und Lösungen von Problematiken, die bei der Bodenreinigung auftreten können. Dem Nutzer können dabei mit Vorteil Auswahl- und/oder Entscheidungshilfen und/oder Auswahl- und/oder Entscheidungseingaben zur Verfügung gestellt werden, die an das Gerät weitergegeben werden.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte sowie jegliche Hindernisse an.

Unter Sensoren ist jegliche Detektionseinrichtung zu verstehen, die dazu geeignet ist, Hindernisse bevorzugt zuverlässig zu detektieren, bevorzugt aus verschiedenen Richtungen. Diese ist beispielsweise sensorbasiert, laserbasiert und/oder kamerabasiert.

Unter einem kritischen Bereich ist insbesondere jeglicher Bereich des Bodenbearbeitungsgeräts zu verstehen, der das Bodenreinigen für das mobile, selbstfahrende Gerät erschwert. Beispielsweise weist ein kritischer Bereich Engstellen auf, die das Gerät umfahren muss, oder an der sich das Gerät festfahren kann.

Unter verschiedenen Richtungen ist insbesondere die Detektion aus unterschiedlichen Perspektiven zu verstehen. Beispielsweise umfährt das Gerät den kritischen Bereich und scannt diesen dabei ab. So kann das Gerät aus unterschiedlichen Richtungen den kritischen Bereich detektieren und die Genauigkeit der Kartierung des kritischen Bereichs stetig erhöhen.

Unter vorbestimmten Kriterien sind insbesondere Kriterien zu verstehen, die den kritischen Bereich weiter definieren. Beispielsweise zählen zu den Kriterien die Anzahl und/oder exakte Position der Stuhl- beziehungsweise Tischbeine, das exakte Vermessen des kritischen Bereichs, den Anteil der reinigbaren Fläche im kritischen Bereich und/oder die Wahrscheinlichkeit eines Festfahrens des Geräts im kritischen Bereich.

Unter einem Auswerten ist insbesondere zu verstehen, aus den vorbestimmten Kriterien Rückschlüsse zu schließen, die insbesondere auf ein optimales Reinigungsergebnis des kritischen Bereichs zielen, wie beispielsweise eine optimale Reinigungsstrategie des kritischen Bereichs, einen optimierten Reinigungsablauf im kritischen Bereich, das Anzeigen bei der Reinigung nicht erreichbarer Bereiche und/oder Aufzeigen verbesserter Reinigungsergebnisse unter veränderten Bedingungen im kritischen Bereich, wie beispielsweise das Verschieben von Stühlen im kritischen Bereich, um eine größere Reinigungsfläche abzudecken.

Unter einem weiteren Vorgehen ist insbesondere zu verstehen, wie das mobile, selbstfahrende Gerät basierend auf den Ergebnissen der Auswertung weiter verfahren soll. Beispielsweise kann das weitere Vorgehen das Starten der Reinigungstätigkeit oder das Beenden der Reinigungstätigkeit beinhalten. Alternativ oder zusätzlich kann als weiteres Vorgehen das Aussparen verschiedener Bereiche oder Teilbereiche bei der Reinigungstätigkeit des Geräts verstanden werden.

Bei einer vorteilhaften Ausführungsform erfolgt das Erfassen des kritischen Bereichs automatisch, insbesondere geräteabhängig, oder nutzerabhängig. Erkennt das mobile, selbstfahrende Gerät beispielsweise einen Bereich mit vermehrten Stuhl- und/oder Tischbeinen, erfasst das Gerät mit seinen Sensoren diesen automatisch intensiver, indem das Gerät den kritischen Bereich umfährt und aus unterschiedlichen Richtungen abscannt. Anschließend wird der Aufbau des kritischen Bereichs ausgewertet. Dies kann bei Erkennen der entsprechenden kritischen Bereiche automatisch, also gerätebedingt erfolgen. Alternativ kann das Erfassen des kritischen Bereichs durch den Nutzer durch ein entsprechendes Programm ausgelöst werden, wie beispielsweise durch ein "Table&Chair"-Programm in der entsprechenden Reinigungs-App. Hier ist eine Interaktion des Nutzers notwendig, um das Programm zu starten und das Erfassen zu beginnen.

Bei einer weiteren vorteilhaften Ausführungsform erstellt das mobile selbstfahrende Gerät nach dem Erfassen des kritischen Bereichs eine insbesondere aktuelle Detailkarte. Insbesondere wird eine genaue Karte durch Vermessen des kritischen Bereichs aus mehreren Positionen und Richtungen erstellt. Das mobile, selbstfahrende Gerät kann die Detailkarte, die im Gegensatz zu der im Speicher von der Explorationsfahrt stammenden Umgebungskarte die tatsächlichen, zum aktuellen Zeitpunkt vorhandenen Positionen der Stuhl- und Tischbeine enthält, detaillierter auswerten.

Bei einer weiteren vorteilhaften Ausführungsform beinhaltet das Auswerten zumindest eines der folgenden Kriterien:
- Reinigungsablauf,
- Anteil der möglichen zu reinigenden Fläche im kritischen Bereich,
- Angabe zu nicht erreichbaren Bereichen,
- Markieren von Hindernissen im kritischen Bereich, die eine Bodenreinigung beeinflussen, und/oder Angaben zu einem verbesserten Reinigungsergebnis, insbesondere bei einem möglichen Eingriff durch den Nutzer wie beispielsweise einem Entfernen des Hindernisses durch den Nutzer,
- Angaben zu anstehenden nutzerabhängigen Reinigungsaufgaben.

Mit der Detailkarte und dem Wissen über die eigene Größe und die eigenen Fähigkeiten des mobilen, selbstfahrenden Geräts kann das Gerät auswerten, mit welcher Reinigungsstrategie und mit welchem Ablauf der Bodenbearbeitungsbereich optimal gereinigt werden kann. Weiterhin kann das Gerät vorab bestimmen, welchen Anteil der Bodenfläche, zum Beispiel als Prozentangabe, das Gerät mit der aktuellen Positionierung der Stühle und/oder Tische erreichen kann. Ebenso kann das Gerät eine Wahrscheinlichkeit ermitteln, die widerspiegelt, ob sich das Gerät in der vorliegenden Situation festfährt. Dem Nutzer kann nun zum Beispiel mittels der Reinigungs-App mitgeteilt werden, wie gut die zu erwartende Bodenfläche gereinigt werden kann, und ob nicht erreichbare Bereiche vorhanden sind. Neben der reinen Benachrichtigung des Nutzers kann eine Interaktion verbunden werden, indem dem Nutzer aufgezeigt wird, welche Ergebnisse erreicht werden können, wenn der Nutzer die Stühle und/oder Tische und/oder Hindernisse aus dem Weg räumen würde. Auch kann das Gerät in der Detailkarte einzelne Hindernisse wie beispielsweise Stühle angeben, indem diese Hindernisse in der Detailkarte beispielsweise farblich markiert werden, und ohne die das Reinigungsergebnis signifikant verbessert werden kann.

Bei einer weiteren vorteilhaften Ausführungsform erfolgt die Interaktion über eine App an einem tragbaren Zusatzgerät des Nutzers. Über das Zusatzgerät ist das Gerät also flexibel mit dem Nutzer verbunden. Eine erweiterte Interaktion ermöglich sich mit Vorteil.

Bei einer weiteren vorteilhaften Ausführungsform beinhaltet die Interaktion mit dem Nutzer ein Anfragen an den Nutzer über das weitere Vorgehen. Das Gerät und der Nutzer bilden also ein kooperatives Team, um ein bestmögliches Reinigungsergebnis zu erzielen. Hierbei unterstützt der Nutzer das Gerät bei Aufgaben, die das Gerät zwar als solche erkennt, aber nicht alleine verrichten kann, wie beispielsweise das Verschieben oder Verstellen von Stühlen, um ein optimales Reinigungsergebnis zu erzielen. Dabei kann das Gerät angeben, inwiefern und zu welchem Anteil, zum Beispiel als Prozentangabe, eine derartige Aktion des Nutzers das Reinigungsergebnis beeinflussen und insbesondere verbessern wird. Mit dieser Angabe kann der Nutzer selbst entscheiden, ob es ihm mit der angegebenen Verbesserung Wert ist, die vorgeschlagene Aktion durchzuführen.

Bei einer weiteren vorteilhaften Ausführungsform beginnt das mobile, selbstfahrende Gerät bei einer fehlenden Rückmeldung des Nutzers die Bearbeitung der Bodenfläche. Reagiert der Nutzer also nicht auf die Anfrage des Geräts, startet das Gerät das Reinigungsprogramm des Bodenbearbeitungsbereichs ungeachtet des unter Umständen nicht erreichbaren kritischen Bereichs. Ist der Nutzer also beispielsweise über die App nicht erreichbar, wird die Reinigung nicht blockiert, sondern beginnt wie geplant, wodurch sich Zeitverzögerungen in der Reinigung mit Vorteil reduzieren.

Erfindungsgemäß hinterlegt der Nutzer für eine Wahrscheinlichkeit eines Festfahrens des Geräts im kritischen Bereich einen Grenzwert, ab welchem das mobile, selbstfahrende Gerät die Bearbeitung der Bodenfläche nicht beginnt, insbesondere anhält beziehungsweise deaktiviert, und/oder den kritischen Bereich bei der Bearbeitung der Bodenfläche auslässt. Der Nutzer kann also beim Einrichten seines mobilen, selbstfahrenden Geräts und der zugehörigen App entsprechende Grenzwerte angeben, ab welchem das Reinigungsprogramm erst gar nicht starten soll, da das Ergebnis nicht ausreichend zufriedenstellend ist. Zudem kann der Nutzer einen Grenzwert festlegen, der beispielsweise die Wahrscheinlichkeit des Festfahrens betrifft, ab welchem das Gerät den kritischen Bereich auslassen soll, um ein mögliches Festfahren und eine damit verbundene Unterbrechung des Reinigungsprogramms zu verhindern.

Bei einer weiteren vorteilhaften Ausführungsform beinhaltet die Interaktion eine Aufforderung an den Nutzer, Änderungen im kritischen Bereich vorzunehmen, um ein bestmöglichstes Reinigungsergebnis zu erzielen, und/oder Bewertungen zu den Änderungen im kritischen Bereich. In der App werden dem Nutzer also neben der reinen Benachrichtigung des Vorhandenseins von kritischen Bereichen Angaben angezeigt, wie diese kritischen Bereiche hinsichtlich des Reinigungsergebnisses verhindert beziehungsweise verbessert werden können. Zusätzlich können die einzelnen kritischen Bereiche hinsichtlich ihrer Beeinflussung des Reinigungsergebnisses bewertet und dem Nutzer angezeigt werden. Beispielsweise wird in der App angezeigt, dass der ermittelte kritische Bereich eine Reinigung der Fläche zu nur 30 Prozent zulässt, falls der kritische Bereich nicht vom Nutzer aktiv geändert wird, zum Beispiel durch Verschieben eines Stuhles.

Erfindungsgemäß umfasst ein mobiles, selbstfahrendes Gerät, insbesondere Bodenreinigungsgerät zur autonomen Bearbeitung von Bodenflächen wie ein Saug- und/oder Kehr- und/oder Wischroboter, das zum Durchführen des erfindungsgemäßen Verfahrens geeignet ist, eine Detektionseinrichtung zum Detektieren von Hindernissen und/oder Objekten und kritischen Bereichen mit engen Platzverhältnissen aus verschiedenen Richtungen, eine Auswerteeinheit zum Auswerten eines Aufbaus der kritischen Bereiche mit dem Wissen über eine eigene Größe und Fähigkeiten des Geräts anhand vorbestimmter Kriterien, um eine Wahrscheinlichkeit eines Festfahrens des Geräts im kritischen Bereich auszurechnen, und eine Interaktionseinheit zur Interaktion mit einem tragbaren Zusatzgerät eines Nutzers bezüglich des weiteren Vorgehens.

Unter einer Detektionseinrichtung ist jegliche Einrichtung zu verstehen, die dazu geeignet ist, Hindernisse bevorzugt zuverlässig zu detektieren, bevorzugt aus verschiedenen Richtungen. Diese ist vorzugsweise sensorbasiert, laserbasiert und/oder kamerabasiert. Als Detektionseinrichtung umfasst das mobile, selbstfahrende Gerät vorzugsweise eine geeignete Sensorik wie beispielsweise eine 3D Kamera, ein PMD-Sensor, 3D-LIDAR oder eine (Stereo-) Kamera. Die Detektionseinrichtung ist insbesondere dazu geeignet, Objekte und Gegenstände, die sich auf dem Boden befinden, zu erkennen.

Unter einer Auswerteeinheit ist jegliche Einheit zu verstehen, die dazu geeignet ist, aus den vorbestimmten Kriterien Rückschlüsse zu schließen und diese insbesondere anhand vorgegebener Kriterien auszuwerten, die insbesondere auf ein optimales Reinigungsergebnis des kritischen Bereichs zielen, wie beispielsweise eine optimale Reinigungsstrategie des kritischen Bereichs, einen optimierten Reinigungsablauf im kritischen Bereich, das Anzeigen bei der Reinigung nicht erreichbarer Bereiche und/oder Aufzeigen verbesserter Reinigungsergebnisse unter veränderten Bedingungen im kritischen Bereich, wie beispielsweise das Verschieben von Stühlen im kritischen Bereich, um eine größere Reinigungsfläche abzudecken.

Unter einer Interaktionseinheit ist insbesondere jegliche Einheit zu verstehen, die eine Interaktion zwischen Gerät und Nutzer ermöglicht. Insbesondere kommuniziert die Interaktionseinheit mit dem Zusatzgerät des Nutzers beispielsweise über eine App und insbesondere über eine drahtlose Verbindung zwischen Gerät und Zusatzgerät.

Jegliche Merkmale, Ausgestaltungen, Ausführungsformen und Vorteile das Verfahren betreffend finden auch in Zusammenhang mit dem erfindungsgemäßen mobilen, selbstfahrenden Gerät Anwendung, und umgekehrt.

Die Erfindung wird anhand der nachfolgenden, lediglich Beispiele darstellenden Ausführungen der Erfindung näher erläutert. Es zeigen:
- Figur 1:: eine schematische Ansicht eines Ausführungsbeispiels einer Umgebungskarte des erfindungsgemäßen Verfahrens zur automatischen Bearbeitung von Bodenflächen mit Hilfe eines mobilen, selbstfahrenden Geräts, und
- Figur 2:: einen schematischen Verfahrensablauf eines erfindungsgemäßen Verfahrens.

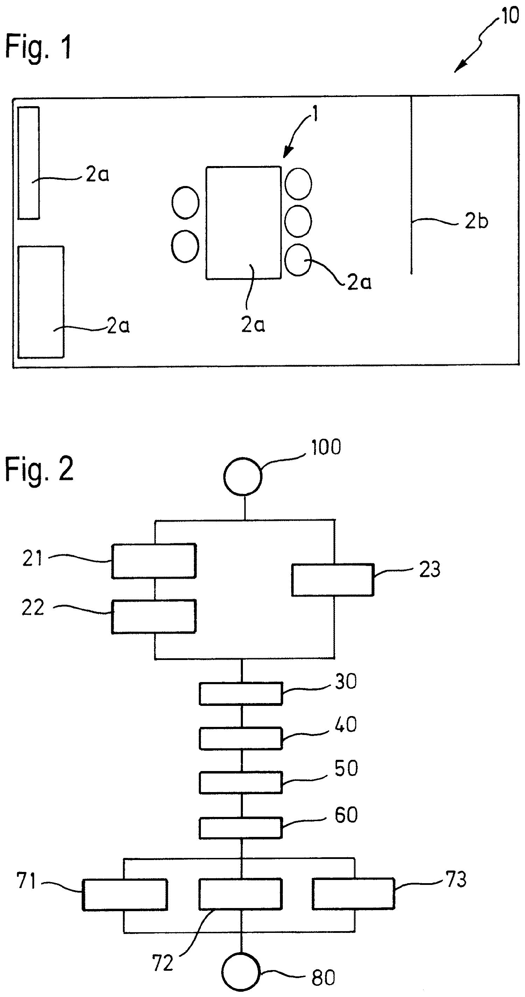

Figur 1 zeigt eine Umgebungskarte 10, die bei einer Explorationsfahrt eines mobilen, selbstfahrenden Geräts, insbesondere eines Staubsaugerroboters, detektiert und anschließend erstellt worden ist. Die Umgebungskarte 10 zeigt dabei einen Bodenbearbeitungsbereich, der zur Reinigung mit dem Staubsaugerroboter vorgesehen ist.

In der Umgebungskarte 10 sind jegliche Hindernisse, insbesondere Möbel 2a und Wände 2b, dargestellt, die der Staubsaugerroboter in dem Bodenbearbeitungsbereich detektiert hat. Insbesondere ist auch ein kritischer Bereich 1 im Bodenbearbeitungsbereich angezeigt. Der kritische Bereich 1 ist ein Bereich mit engen Platzverhältnissen, aus denen der Staubsaugerroboter häufig keinen Weg mehr zurückfindet oder sich verklemmt. Vorliegend umfasst der kritische Bereich 1 einen Tisch mit Stühlen, zwischen dessen Beinen sich der Staubsaugerroboter verklemmen oder festfahren kann, womit der Staubsaugerroboter sein Reinigungsprogramm nicht beenden kann und menschliche Hilfe benötigt.

Um ein Festfahren und ein Unterbrechen oder Beenden des Reinigungsprogramms an kritischen Bereichen 1 zu verhindern, wird die Interaktion zwischen Staubsaugerroboter und Nutzer erhöht. Vor Beginn seiner Reinigungstätigkeit teilt der Staubsaugerroboter dem Nutzer den detektierten kritischen Bereich 1 mittels einer Reinigungs-App auf einem Zusatzgerät des Nutzers mit. Zudem teilt der Staubsaugerroboter mittels der Reinigungs-App mit, ob es wahrscheinlich ist, dass der Staubsaugerroboter seine Aufgabe nicht fertigstellen kann, wenn er diese nun durchführt. Dabei werden dem Nutzer Alternativen angeboten, insbesondere, dass der Staubsaugerroboter den Boden nicht jetzt reinigt, oder dass der Nutzer die Stühle oder einige Stühle wegstellt, bevor der Staubsaugerroboter seine Arbeit beginnt, um ein gutes Reinigungsergebnis zu erzielen.

Um hierfür eine exakte beziehungsweise detaillierte Einschätzung beziehungsweise Bewertung abgeben zu können, erfasst der Staubsaugerroboter alle kritischen Bereiche insbesondere mit Stuhl- und Tischbeinen intensiver mit seinen Sensoren, um deren Aufbau genauer auszuwerten. Dies kann bei Erkennen von kritischen Bereichen durch den Staubsaugerroboter automatisch erfolgen oder durch ein spezielles Programm durch den Nutzer in seiner Reinigungs-App ausgelöst werden.

Eine genaue Detailkarte des kritischen Bereichs und insbesondere des Bodenbearbeitungsbereichs wird durch Vermessen aus mehreren Positionen und Richtungen erstellt. Der Staubsaugerroboter wertet die Detailkarte, die im Gegensatz zu der im Speicher von der zurückliegenden Explorationsfahrt stammenden Umgebungskarte die tatsächlichen, zum aktuellen Zeitpunkt vorhandenen Positionen der Stuhl- und Tischbeine enthält, detailliert aus. Mit dem Wissen über die eigene Größe und die Fähigkeiten des Staubsaugerroboters kann dieser auswerten, mit welcher Reinigungsstrategie und mit welchem Ablauf die Bodenfläche optimal gereinigt wird. Weiterhin kann der Staubsaugerroboter bereits vor seiner Reinigungstätigkeit bestimmen, welchen Anteil der Bodenfläche zum Beispiel in Prozentangabe er mit der aktuellen Stuhlpositionierung reinigen kann. Ebenso kann eine Wahrscheinlichkeit ausgerechnet werden, die widerspiegelt, ob sich der Staubsaugerroboter in der vorliegenden Situation festfährt.

Dem Nutzer wird nun nach der Auswertung beispielsweise in seiner App mitgeteilt, wie gut die zu reinigende Bodenfläche abgedeckt werden kann, und ob nicht erreichbare Bereiche vorhanden sind. Neben der reinen Benachrichtigung des Nutzers kann eine Interaktion verbunden werden, indem dem Nutzer angezeigt wird, welche Ergebnisse erreicht werden würden, wenn der Nutzer Stühle aus dem Weg räumt. Zudem können dem Nutzer in der App Stühle beispielsweise markiert und angezeigt werden, mit denen sich das Reinigungsergebnis bei Entfernen signifikant erhöht. Erfindungsgemäß gibt der Nutzer beim Einrichten des Staubsaugerroboters und der Reinigungs-App Grenzwerte an, ab welchen Wahrscheinlichkeitswerten für ein Festfahren der Staubsaugerroboter seine Reinigungstätigkeit nicht beginnt oder entsprechende kritische Bereiche, beispielsweise Engstellen, auslässt.

Reagiert der Nutzer auf die Anfragen des Staubsaugerroboters nicht, so beginnt der Staubsaugerroboter die Reinigung des Bodenbearbeitungsbereiches inklusive kritischem Bereich ungeachtet des unter Umständen nicht zu erreichenden Bereichs.

Durch die Interaktion zwischen Nutzer und Staubsaugerroboter bilden diese ein kooperatives Team, um ein bestmögliches Reinigungsergebnis zu erzielen. Der Staubsaugerroboter kann dabei nicht alle Aufgaben im Haushalt erledigen. Einige Arbeiten sind vom Nutzer zu bewältigen. Mit Hilfe seiner Sensorik kann der Staubsaugerroboter dem Nutzer Hinweise geben, wo eine Reinigung oder Arbeiten des Nutzers zu tätigen ist. Beispielsweise erkennt der Staubsaugerroboter Staub auf einem Regal, das er selbst nicht erreichen kann. Der Staubsaugerroboter informiert den Nutzer, dass dieser dort Staub wischen sollte. Zusätzlich oder alternativ kann der Staubsaugerroboter den Nutzer informieren, dass eine manuelle Nassreinigung durchgeführt werden sollte, im Falle, dass der Staubsaugerroboter eine klebrige oder flüssige Verschmutzung am Boden feststellt. Auch kann der Staubsaugerroboter den Nutzer informieren, wenn er spezielle Gerüche erkennt, und entsprechende Gegenmaßnahmen vorschlagen.

Durch die Erfindung können kritische Bereiche beispielsweise mit einer Mehrzahl von Stuhlbeinen genauer kartiert werden und es kann durch die darauf basierende Anpassung des Reinigungsverhaltens bzw. durch Feedback an den Nutzer ein Festfahren in diesen Bereichen vermieden werden, so dass dort gründlicher gereinigt werden kann. Wenn der Staubsaugerroboter dem Nutzer bereits vor Beginn der Reinigung mitteilt, mit welcher Wahrscheinlichkeit er sich festfährt, erhöht dies die Aufmerksamkeit des Nutzers für kritische Situationen und die Akzeptanz für ein möglicherweise durchzuführendes Eingreifen. Eine größtmögliche Fläche kann mit Vorteil ohne zusätzliches Eingreifen des Nutzers gereinigt werden.

Figur 2 zeigt ein Flussdiagramm zu einem möglichen Ablauf eines Reinigungsverfahrens mit einem Staubsaugerroboter. Zum Start 100 reinigt der Staubsaugerroboter im Verfahrensschritt 21 den vom Nutzer vorgegebenen Bereich der Wohnung, wobei er bei seiner Reinigung zum Beispiel einen kritischen Bereich mit vielen Stuhlbeinen erkennt (Schritt 22). Alternativ startet der Nutzer ein Programm mittels einer App am Staubsaugerroboter und schickt diesen zu kritischen Bereichen, zum Beispiel mit vielen Stühlen (Schritt 23). In beiden Fällen scannt der Staubsaugerroboter im Schritt 30 den kritischen Bereich von mehreren Positionen und aus mehreren Richtungen ab und erstellt eine Detailkarte, die die aktuelle Situation widergibt. Im Schritt 40 berechnet der Staubsaugerroboter den optimalen Pfad für eine höchstmögliche Abdeckung mit niedriger Wahrscheinlichkeit eines Festfahrens. Im Schritt 50 informiert der Staubsaugerroboter den Nutzer über die erreichbare Abdeckung und die Wahrscheinlichkeit eines Festfahrens. Anschließend fragt der Staubsaugerroboter den Nutzer, ob der kritische Bereich unter diesen Bedingungen gereinigt werden soll oder ob der Nutzer etwas ändern möchte. Im nächsten Schritt 71 betätigt der Nutzer die Reinigung, womit der Staubsaugerroboter die Reinigung des kritischen Bereichs beginnt. Alternativ (Schritt 72) ändert der Nutzer Bedingungen des kritischen Bereichs, indem er beispielsweise Stühle wegstellt, und der Staubsaugerroboter anschließend die Reinigung des kritischen Bereichs beginnt. Weiter alternativ (Schritt 73) reagiert der Nutzer nicht auf die Anfrage des Staubsaugerroboters, womit der Staubsaugerroboter die Reinigung des kritischen Bereichs beginnt, optional nur, falls die Wahrscheinlichkeit für ein Festfahren geringer ist als ein vom Nutzer festgelegter beziehungsweise vorgegebener Schwellwert. In jedem Fall beendet der Staubsaugerroboter im Schritt 80 seine Reinigungstätigkeit.

## Patentansprüche

1. Verfahren zur autonomen Bearbeitung von Bodenflächen mit Hilfe eines mobilen, selbstfahrenden Geräts, insbesondere Bodenreinigungsgeräts wie ein Saug- und/oder Kehr- und/oder Wischroboter, umfassend folgende Verfahrensschritte:
- Durchführen einer Explorationsfahrt des mobilen, selbstfahrenden Geräts in einem vorgesehenen Bodenbearbeitungsbereich und Erstellen einer Umgebungskarte (10),
- Erfassen eines kritischen Bereichs (1) mit engen Platzverhältnissen mit Sensoren des mobilen, selbstfahrenden Geräts aus verschiedenen Richtungen,
- Interaktion mit einem Nutzer des mobilen, selbstfahrenden Geräts bezüglich des weiteren Vorgehens, und/oder
- Festlegen einer Bearbeitungsreihenfolge verschiedener Bereiche des Bodenbearbeitungsbereichs, wobei der kritische Bereich (1) in der Bearbeitungsreihenfolge zuletzt gesetzt wird,
**dadurch gekennzeichnet, dass** ein Aufbau des kritischen Bereichs (1) mit dem Wissen über eine eigene Größe und Fähigkeiten des Geräts anhand vorbestimmter Kriterien ausgewertet wird, um eine Wahrscheinlichkeit eines Festfahrens des Geräts im kritischen Bereich auszurechnen, und dass der Nutzer für die Wahrscheinlichkeit des Festfahrens des Geräts im kritischen Bereich (1) einen Grenzwert hinterlegt, ab welchem das mobile, selbstfahrende Gerät die Bearbeitung der Bodenfläche nicht beginnt und/oder den kritischen Bereich (1) und/oder Teile des kritischen Bereichs (1) bei der Bearbeitung der Bodenfläche auslässt.

2. Verfahren nach Anspruch 1, wobei das Erfassen des kritischen Bereichs (1) automatisch, insbesondere geräteabhängig, oder nutzerabhängig erfolgt.

3. Verfahren nach einem der vorhergehenden Ansprüche, wobei das mobile selbstfahrende Gerät nach dem Erfassen des kritischen Bereichs (1) eine insbesondere aktuelle Detailkarte erstellt.

4. Verfahren nach einem der vorhergehenden Ansprüche, wobei das Auswerten zumindest eines der folgenden Kriterien beinhaltet:
- Reinigungsablauf,
- Anteil der möglichen zu reinigenden Fläche im kritischen Bereich (1),
- Angabe zu nicht erreichbaren Bereichen,
- Markieren von Hindernissen im kritischen Bereich, die eine Bodenreinigung beeinflussen, und/oder Angaben zu einem verbesserten Reinigungsergebnis,
- Angaben zu anstehenden nutzerabhängigen Reinigungsaufgaben.

5. Verfahren nach einem der vorhergehenden Ansprüche, wobei die Interaktion über eine App an einem tragbaren Zusatzgerät erfolgt.

6. Verfahren nach einem der vorhergehenden Ansprüche, wobei die Interaktion mit dem Nutzer ein Anfragen an den Nutzer über das weitere Vorgehen beinhaltet.

7. Verfahren nach Anspruch 6, wobei bei einer fehlenden Rückmeldung des Nutzers das mobile, selbstfahrende Gerät die Bearbeitung der Bodenfläche beginnt.

8. Verfahren nach einem der vorhergehenden Ansprüche, wobei die Interaktion eine Aufforderung an den Nutzer beinhaltet, Änderungen im kritischen Bereich (1) vorzunehmen, um ein bestmöglichstes Reinigungsergebnis zu erzielen, und/oder Bewertungen zu den Änderungen im kritischen Bereich (1).

9. Mobiles, selbstfahrendes Gerät zum Durchführen eines Verfahrens nach einem der vorhergehenden Ansprüche, insbesondere Bodenreinigungsgerät zur autonomen Bearbeitung von Bodenflächen wie ein Saug- und/oder Kehr- und/oder Wischroboter, der ein Verfahren nach einem der vorhergehenden Ansprüche durchführen kann, umfassend
- eine Detektionseinrichtung zum Detektieren von Hindernissen und/oder Objekten und kritischen Bereichen (1) mit engen Platzverhältnissen aus verschiedenen Richtungen,
- eine Auswerteeinheit zum Auswerten eines Aufbaus der kritischen Bereiche (1) mit dem Wissen über eine eigene Größe und Fähigkeiten des Geräts anhand vorbestimmter Kriterien, um eine Wahrscheinlichkeit eines Festfahrens des Geräts im kritischen Bereich auszurechnen,
- eine Interaktionseinheit zur Interaktion mit einem tragbaren Zusatzgerät eines Nutzers bezüglich des weiteren Vorgehens.

## Claims

1. Method for the autonomous processing of floor areas with the aid of a mobile, self-propelled appliance, in particular floor cleaning appliance such as a vacuum cleaning and/or sweeping and/or mopping robot, comprising the following method steps:
- performing an exploration run of the mobile, self-propelled appliance in a provided floor processing region and creating an environment map (10),
- registering a critical region (1) with tight spatial conditions using sensors of the mobile, self-propelled appliance from different directions,
- interacting with a user of the mobile, self-propelled appliance with regard to the further procedure, and/or
- stipulating a processing order of different regions of the floor processing region, wherein the critical region (1) is set as being last in the processing order,
**characterised in that** a layout of the critical region (1) is evaluated using the knowledge of an inherent size and capabilities of the appliance on the basis of predetermined criteria, in order to calculate a probability of the appliance coming to a standstill in the critical region, and that the user records a limit value, for the probability of the appliance coming to a standstill in the critical region (1), after which the mobile, self-propelled appliance does not begin to process the floor area and/or omits the critical region (1) and/or parts of the critical region (1) when processing the floor area.

2. Method according to claim 1, wherein the registering of the critical region (1) takes place in an automatic, in particular appliance-dependent, or user-dependent manner.

3. Method according to one of the preceding claims, wherein the mobile self-propelled appliance creates an, in particular current, detailed map after registering the critical region (1).

4. Method according to one of the preceding claims, wherein the evaluation contains at least one of the following criteria:
- cleaning sequence,
- portion of the possible area to be cleaned in the critical region (1),
- specification of regions not to be reached,
- marking of obstacles in the critical region which influence floor cleaning, and/or specifications for an improved cleaning result,
- specifications for upcoming user-dependent cleaning tasks.

5. Method according to one of the preceding claims, wherein the interaction takes place via an app on a portable additional device.

6. Method according to one of the preceding claims, wherein the interaction with the user contains querying of the user regarding the further procedure.

7. Method according to claim 6, wherein, in the event of no response from the user, the mobile, self-propelled appliance begins to process the floor area.

8. Method according to one of the preceding claims, wherein the interaction contains a prompt to the user to make changes in the critical region (1), in order to achieve a best-possible cleaning result, and/or assessments regarding the changes in the critical region (1).

9. Mobile, self-propelled appliance for performing a method according to one of the preceding claims, in particular floor cleaning appliance for autonomous processing of floor areas such as a vacuum cleaning and/or sweeping and/or mopping robot, which can perform a method according to one of the preceding claims, comprising
- a detection facility for detecting obstacles and/or objects and critical regions (1) with close spatial conditions from different directions,
- an evaluation unit for evaluating a layout of the critical regions (1) with the knowledge regarding an inherent size and capabilities of the appliance on the basis of predetermined criteria, in order to calculate a probability of the appliance coming to a standstill in the critical region,
- an interaction unit for interacting with a portable additional device of a user with regard to the further procedure.

## Revendications

1. Procédé de traitement autonome de surfaces de sol à l'aide d'un appareil, en particulier d'un appareil de nettoyage du sol, automoteur mobile, tel qu'un robot aspirateur et/ou un robot de balayage et/ou un robot laveur de sol, comprenant les opérations suivantes :
- exécution d'un parcours d'exploration de l'appareil automoteur mobile dans une zone de traitement du sol proposée et élaboration d'une carte de l'environnement (10),
- détection d'une zone critique (1) comprenant des espaces étroits au moyen de capteurs de l'appareil automoteur mobile dans différentes directions,
- interaction avec un utilisateur de l'appareil automoteur mobile concernant la marche à suivre, et/ou
- détermination d'une séquence de traitement de différentes zones de la zone de sol à traiter, où la zone critique (1) est placée en dernier dans la séquence de traitement,
**caractérisé en ce qu'**une constitution de la zone critique (1) est évaluée à l'aide des connaissances sur une dimension propre et des capacités de l'appareil en fonction de critères prédéfinis, afin de calculer une probabilité de coincement de l'appareil dans la zone critique, et
**en ce que** l'utilisateur enregistre une valeur limite pour la probabilité de coincement de l'appareil dans la zone critique (1), à partir de laquelle l'appareil automoteur mobile ne débute pas le traitement de la surface de sol et/ou omet la zone critique (1) et/ou des parties de la zone critique (1) lors du traitement de la surface de sol.

2. Procédé selon la revendication 1, dans lequel la détection de la zone critique (1) s'effectue de façon automatique, en particulier en fonction de l'appareil ou en fonction de l'utilisateur.

3. Procédé selon l'une des revendications précédentes, dans lequel l'appareil automoteur mobile établit une carte détaillée, en particulier actuelle, après la détection de la zone critique (1).

4. Procédé selon l'une des revendications précédentes, dans lequel l'évaluation inclut au moins un des critères suivants :
- une procédure de nettoyage,
- une proportion de la surface possible à nettoyer dans la zone critique (1),
- une information sur des zones non accessibles,
- un repérage d'obstacles dans la zone critique, qui affectent un nettoyage du sol, et/ou des informations pour obtenir un meilleur résultat de nettoyage,
- des informations sur des tâches de nettoyage à venir dépendant de l'utilisateur.

5. Procédé selon l'une des revendications précédentes, dans lequel l'interaction s'effectue par l'intermédiaire d'une application sur un appareil auxiliaire portatif.

6. Procédé selon l'une des revendications précédentes, dans lequel l'interaction avec l'utilisateur inclut une demande à l'utilisateur concernant la marche à suivre.

7. Procédé selon la revendication 6, dans lequel, en l'absence de message en retour de l'utilisateur, l'appareil automoteur mobile débute le traitement de la surface de sol.

8. Procédé selon l'une des revendications précédentes, dans lequel l'interaction inclut une invite à l'utilisateur pour procéder à des modifications dans la zone critique (1), afin d'obtenir un résultat de nettoyage le meilleur possible et/ou des commentaires sur les modifications dans la zone critique (1).

9. Appareil automoteur mobile permettant de mettre en œuvre un procédé selon l'une des revendications précédentes, en particulier appareil de nettoyage du sol pour un traitement autonome des surfaces de sol tel qu'un robot aspirateur, un robot de balayage et/ou un robot laveur de sol, qui peut exécuter un procédé selon l'une des revendications précédentes, comprenant :
- un dispositif de détection destiné à détecter des obstacles et/ou des objets et des zones critiques (1) comprenant des espaces étroits dans différentes directions,
- une unité d'évaluation pour évaluer une constitution des zones critiques (1) à l'aide de la connaissance sur une grandeur propre et des capacités de l'appareil en fonction de critères prédéterminés, afin de calculer une probabilité de coincement de l'appareil dans la zone critique, et
- une unité d'interaction pour une interaction avec un appareil auxiliaire portatif d'un utilisateur concernant la marche à suivre.
